# EUROPÄISCHE PATENTSCHRIFT

(11) **EP 1 281 939 B1**
(45) Veröffentlichungstag und Bekanntmachung des Hinweises auf die Patenterteilung: **04.09.2013**
(21) Anmeldenummer: 02015749.1
(22) Anmeldetag: 13.07.2002
(51) Int. Cl.: G01F 1/06, G01F 15/14

(54) **Befestigungsring für einen Flüssigkeitszähler**
Fixing ring for a liquid meter
Bague de fixation pour un compteur de liquide

(30) Priorität: 01.08.2001 DE 20112776 U
(43) Veröffentlichungstag der Anmeldung: 05.02.2003
(73) Patentinhaber: Techem Energy Services GmbH, 65760 Eschborn (DE)
(72) Erfinder: Leblang, Lars, 64287 Darmstadt (DE)
(74) Vertreter: KEIL & SCHAAFHAUSEN Patentanwälte

(56) Entgegenhaltungen:
- EP-A- 0 225 448
- EP-A- 0 730 138
- DE-A- 3 613 711
- DE-A- 3 704 464
- DE-C- 19 711 054

## Beschreibung

Die Erfindung betrifft einen Flüssigkeitszähler mit einem Gehäuse in Messkapselbauart, der eine Hydraulikeinrichtung zur Umwandlung eines Flüssigkeitsstromes in zählbare Werte und ein Zählwerk aufweist und der über einen Befestigungsring an dem Gehäuse befestigbar ist.

Bei herkömmlichen Flüssigkeitszählern (Wasserzählern) nach dem Messkapselprinzip mit axialer Ein- und Ausströmung wird die Messkapsel über eine Verschraubung in die entsprechenden Anschlussgehäuse montiert und durch die reibschlüssige Verbindung der Gewinde von Gehäuse und Messkapsel fixiert. Für die Abdichtung ist in einem gewindefreien Bereich ein O-Ring vorgesehen, der sich beim Einschrauben der Messkapsel elastisch an die abzudichtende Fläche anlegt. Es besteht die Gefahr, dass der O-Ring bei der Montage beschädigt wird und eine Undichtigkeit auftritt. Sofern die Abdichtung nach außen oberhalb des Messkapselgewindes angeordnet ist, so dass sich das Gewinde im Feuchtraum befindet, kann das Messkapselgewinde verschmutzen. Durch den Einsatz metallischer Werkstoffe bei den Fixierungselementen kann zudem eine bestimmte Gewichtsgrenze der Messkapsel nicht unterschritten werden. Das Einschrauben der Messkapsel in das Anschlussgehäuse wird per Hand oder mit einem entsprechenden Werkzeug durchgeführt. Zum Festziehen der Messkapsel ist auf jeden Fall ein Werkzeug erforderlich. Wird, wie allgemein üblich, die Messkapsel noch mit einem Manipulationsschutz versehen, erhöht sich der Montageaufwand weiter. Da die Messkapsel üblicherweise ohne Drehmomentenschlüssel montiert werden, variiert das Montagedrehmoment. Dies kann sich, abhängig von der konstruktiven Ausführung der Messkapsel, auf das Messverhalten auswirken, so dass der Messfehler die zulässigen Fehlergrenzen überschreiten kann.

Aus der DE 36 13 711 A 1 ist ein Flüssigkeitszähler bekannt, dessen Gehäuse mit einem zylindrischen Stutzen versehen ist, in den ein Zählwerk zentriert einsetzbar ist. Darüber hinaus ist eine topfförmige Abdeckung vorgesehen, die ein Ende des Zählwerkes übergreift. Für die Zentrierung der Abdeckung relativ zu dem Gehäuse wird die Wandung des Zählwerkes herangezogen, an dem die Abdeckung anliegt. Für die Befestigung der Abdeckung dienen Rastnocken mit jeweils einer Rastnase, die einen gehäuseseitigen Vorsprung hintergreift. Wenn die erforderlichen Herstellungstoleranzen nicht eingehalten werden, kann es dazu kommen, dass keine definierte koaxiale Anordnung der Bauteile vorliegt. Es kann darüber hinaus eine unzuverlässige Befestigung des Zählwerkes erfolgen. Bei großen Maßtoleranzen droht sogar ein Bruch der Abdeckung.

Die DE 37 04 464 A1 beschreibt eine Messeinheit für Durchflusszähler für Flüssigkeiten. Ein Messwerk weist ein Messwerkgehäuse auf, das in die Gehäuseöffnung eines Anschlussstückes mit einem im Wesentlichen U-förmigen Querschnitt einschraubbar ist. Dass Messwerkgehäuse ist mittels eines Renk- bzw. Bajonettverschlusses auf dem Anschlussstück abnehmbar befestigt. Hierzu sind am Außenumfang des Messwerkgehäuse vier radial abragende Bajonettflügel angeformt, denen am Innenumfang der Gehäuseöffnung des Anschlussstücks eine diese aufnehmende Ringnut zugeordnet ist, die Bajonettaussparungen zum Durchführen der Bajonettflügel aufweist. An dem Gehäuseende des Messwerkgehäuses sind zwei in der Gehäuseöffnung des Anschlussstückes bodenseitig zueinander konzentrisch angeordnete Ringdichtungen vorgesehen.

Aus der DE 197 11 054 C1 ist ein Messkapselzähler bekannt, bei dem eine Messkapsel zum Festsetzen in einem Gehäuseteil einen Kopfring mit einem Außengewinde vorsieht, der in ein Innengewinde des Gehäuseteils eingeschraubt wird, so dass sich seine untere Stirnfläche auf dem Flansch der Messkapsel abstützt. Durch Aufsetzen eines Ausheberings auf die Messkapsel wird der Kopfring auf den Aushebering aufgeschoben und unter Verformung elastisch verformbarer Abschnitte radial soweit axial nach innen verlagert, bis sich die unteren Kanten der Abschnitte oberhalb der oberen Stirnfläche des Kopfringes befinden und der Kopfring nicht mehr von der Messkapsel abgezogen werden kann. Zum Montieren des Messkapselzählers wird die Einheit aus Messkapsel, Aushebering und Kopfring in eine Öffnung des Gehäuseteils eingesetzt und der Kopfring in das Gehäuseteil eingeschraubt.

Die EP 0 730 138 A1 beschreibt einen Wasserzähler, bestehend aus einer unteren Struktur zur Durchführung des Wassers durch eine Einlassöffnung und eine Auslassöffnung und einer oberen Struktur, in der die eigentliche Messeinrichtung beherbergt ist. Zur Befestigung der oberen Struktur an der unteren Struktur weist die obere Struktur einen Einsetzabschnitt auf, der in einen Verbindungsöffnungsabschnitt der unteren Struktur eingesetzt und anschließend gedreht wird, wodurch Vorsprünge auf dem äußeren Umfang des Einsetzabschnittes unter Vorsprünge auf dem inneren Umfang des Verbindungsöffnungsabschnittes gelangen und die obere Struktur an die untere Struktur koppeln.

Aufgabe der Erfindung ist es daher, die Nachteile der bekannten Wasserzähler zu vermeiden und eine einfache Montage des Flüssigkeitszählers ohne zusätzliche Werkzeuge zu ermöglichen.

Diese Aufgabe wird mit der Erfindung im Wesentlichen durch die Merkmale des Anspruchs 1 gelöst.

Mit der Erfindung werden somit die Aufgaben der Zentrierung und Abdichtung der Messkapsel gegenüber dem Anschlussgehäuse auf zwei Bereiche des Befestigungsringes aufgeteilt. Die für die Befestigung und Zentrierung notwendigen Kräfte werden von dem äußeren Steg aufgenommen, während der die Dichtwirkung übernehmende innere Steg von diesen Kräften freigehalten wird. Eine Beschädigung der Dichtfläche bei der Montage wird somit vermieden. Auch ist über die Rast- oder Schnappverbindung eine einfache Montage der Messkapsel möglich, ohne dass zusätzliche Spezialwerkzeuge benötigt würden.

Gemäß einer bevorzugten Ausgestaltung der Erfindung ist an dem inneren zylindrischen Steg eine umlaufende Nut zur Aufnahme eines Dichtelements, insbesondere eines O-Ringes, vorgesehen.

Eine zuverlässige Befestigung der Messkapsel an dem Gehäuse wird dadurch erreicht, dass an dem äußeren Steg mehrere, insbesondere wenigstens drei, über den Umfang verteilte Haken angeordnet sind, die einen die Zentrierungsfläche tragenden Vorsprung des Gehäuses hintergreifen. Vorzugsweise sind diese Haken elastisch, so dass der Befestigungsring über den Vorsprung des Gehäuses geschoben werden kann, wobei sich die Haken elastisch spreizen und nach Passieren des Vorsprunges elastisch zurückspringen und den Befestigungsring mit dem Vorsprung des Gehäuses verriegeln.

Um eine definierte axiale Positionierung der Messkapsel zu gewährleisten, ist erfindungsgemäß zwischen den Haken und einer Bodenfläche des Befestigungsringes ein Federelement, bspw. ein Federring oder eine Federscheibe, angeordnet. Das Federelement gleicht mögliche axiale Fertigungstoleranzen zwischen dem Gehäusevorsprung und dem Befestigungsring aus, so dass eine definierte axiale Einbautiefe der Messkapsel gegeben ist.

Zur Demontage des Flüssigkeitszählers ist bei einer bevorzugten Ausgestaltung der Erfindung an der dem Gehäuse zugewandten Seite der Haken eine Schräge ausgebildet, die mit einer entsprechenden Schräge an dem Vorsprung des Gehäuses zusammenwirkt. Bei der Demontage wird der Ring so weit gedreht bis die Haken durch die Schräge gespreizt sind, so dass die Messkapsel axial vom Gehäuse abgezogen werden kann.

Bei einer anderen bevorzugten Ausgestaltung der Erfindung müssen die Haken bei der Demontage zerstört werden. Hierzu weisen sie erfindungsgemäß eine Sollbruchstelle auf, die gleichzeitig die Funktion des Manipulationsschutzes übernimmt. Eine zusätzliche Sicherung, wie der bisher übliche Plombierring oder eine Drahtplombe, kann entfallen.

Um in diesem Fall einen Verdrehschutz des Befestigungsringes zu erreichen, sind erfindungsgemäß an dem Gehäuse Ansätze ausgebildet, die in die am Befestigungsring ausgebildeten Nuten eingreifen können.

Zur einfachen Zerstörung dieser Haken können diese Schlitze aufweisen, in die eine Demontagehilfe (z. B. Schraubendreher) eingreifen kann.

Bei einer anderen bevorzugten Ausführungsform der Erfindung zur zerstörungsfreien Demontage sind in dem äußeren Steg des Befestigungsringes mehrere über den Umfang verteilte schräge Nuten für den Eingriff von an dem Gehäuse vorgesehenen Ansätzen ausgebildet. Hierdurch wird ein Bajonettverschluss gebildet, über den die Messkapsel an dem Gehäuse befestigt werden kann.

Um auch bei bestehenden Gehäusen in Gewindeausführung eine einfache Montage der Messkapsel in o. g. Ausgestaltungen zu ermöglichen, kann zwischen Gehäuse und Messkapsel ein Adapter vorgesehen sein, welcher an der dem Gehäuse zugewandten Seite ein Gewinde zum Einschrauben in das Gehäuse und an seiner der Messkapsel zugewandten Seite die Dichtfläche und Zentrierungsfläche aufweist, so dass der Befestigungsring zur Befestigung der Messkapsel an dem Adapter angreifen kann. Der Adapter übernimmt hierbei die oben beschriebenen Aufgaben des Gehäuses und ist als Teil des Gehäuses anzusehen.

Die Erfindung wird nachfolgend anhand von Ausführungsbeispielen und der Zeichnung näher beschrieben. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: schematisch den Aufbau eines Flüssigkeitszähler,
- Fig. 2: eine erste Ausführungsform eines erfindungsgemäßen Flüssigkeitszählers mit teilweise dargestelltem Gehäuse,
- Fig. 3: einen Schnitt entlang der Linie III-III in Fig. 2,
- Fig. 4: eine Ansicht des Befestigungsringes in Richtung des Pfeils Z in Fig. 3,
- Fig. 5: eine perspektivische Ansicht des Befestigungsringes und des Gehäuses gemäß den Fig. 2 bis 3,
- Fig. 6: eine zweite Ausführungsform des Flüssigkeitszählers mit teilweise dargestelltem Gehäuse,
- Fig. 7: einen Schnitt entlang der Linie VII-VII in Fig. 6,
- Fig. 8: eine Ansicht eines Befestigungsringes in Richtung des Pfeils Z in Fig. 7,
- Fig. 9: eine perspektivische Ansicht des Befestigungsringes und des Gehäuses gemäß den Fig. 6 bis 7,
- Fig. 10: eine dritte Ausführung, die nicht Teil der Erfindung ist, des Flüssigkeitszählers mit teilweise dargestelltem Gehäuse,
- Fig. 11: einen Schnitt entlang der Linie XI-XI in Fig. 10,
- Fig. 12: eine Ansicht eines Befestigungsringes in Richtung des Pfeiles Z in Fig. 11,
- Fig. 13: eine perspektivische Ansicht des Befestigungsringes und des Gehäuses gemäß den Fig. 10 und 11,
- Fig. 14: einen Adapter für einen erfindungsgemäßen Flüssigkeitszähler,
- Fig. 15: einen Schnitt entlang der Linie XV-XV in Fig. 14,
- Fig. 16: eine Ansicht in Richtung des Pfeils Z in Fig. 15, und
- Fig. 17: eine perspektivische Ansicht des Adapters gemäß den Fig. 14 bis 16.

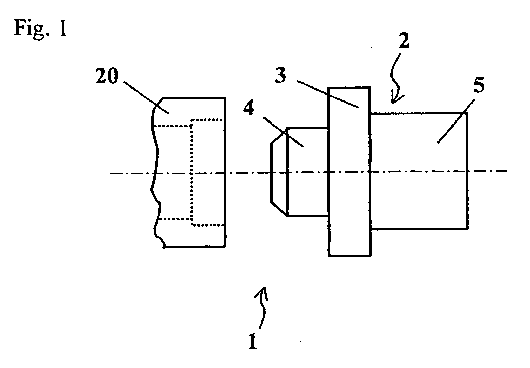

Wie in Fig. 1 schematisch dargestellt ist, weist ein erfindungsgemäßer Flüssigkeitszähler 1, insbesondere ein axial angeströmter Mehrstrahl-Wasserzähler in Messkapselbauweise, eine Messkapsel 2 auf, die an einem Gehäuse 20 angebracht wird. Hierzu ist an der Messkapsel 2 ein Befestigungsring 3 vorgesehen, der sowohl eine Hydraulik 4, in der der durchströmende Flüssigkeitsstrom in zählbare Impulse umgewandelt wird, als auch ein Zählwerk 5 trägt, in dem die Impulse gezählt und an einer nicht dargestellten Anzeige angezeigt werden. Der Befestigungsring 3 ist in der Zeichnung als geschlossene Kappe dargestellt, doch soll dies lediglich eine schematische Darstellung sein. In der Praxis trägt der Befestigungsring in hier nicht näher spezifizierter, üblicher Weise die Hydraulik 4 und das Zählwerk 5.

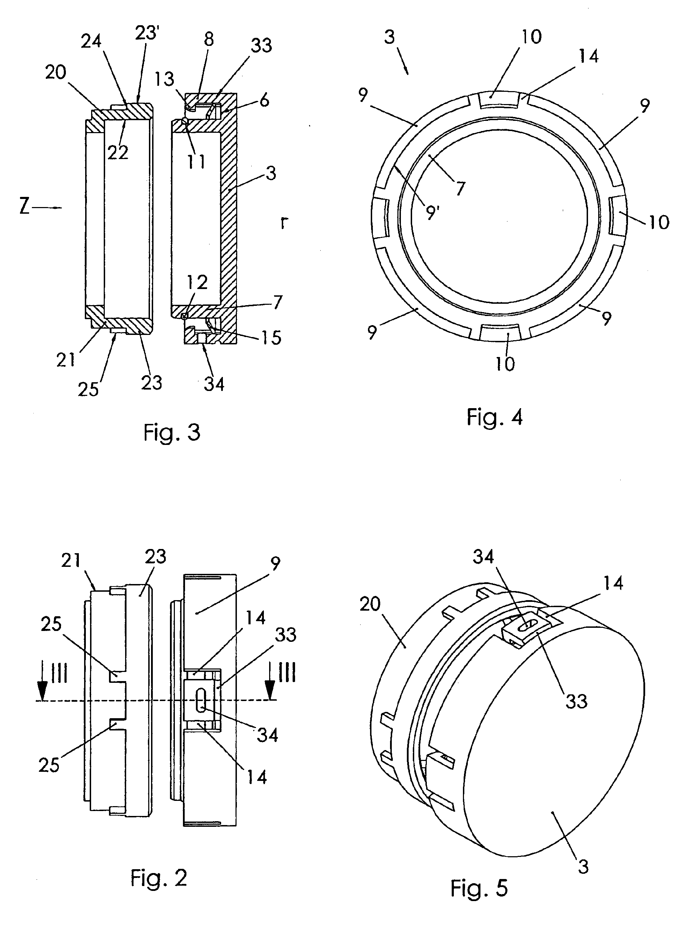

Bei der in den Fig. 2 bis 5 dargestellten ersten Ausführungsform der Erfindung ist der Befestigungsring 3 als U-förmiger Ring dargestellt, der ausgehend von einer Bodenfläche 6 einen umlaufenden inneren Steg 7 und einen umlaufenden äußeren Steg 8 aufweist.

An der Außenfläche des inneren Steges 7 ist eine umlaufende Nut 11 ausgebildet, in der ein O-Ring 12 aufgenommen ist.

Wie sich aus Fig. 4 ergibt, wird der äußere Steg 8 durch eine Vielzahl von Stegabschnitten gebildet. Über den Umfang verteilte Zentrierungsabschnitte 9 des äußeren Steges 8 dienen der definierten konzentrischen Ausrichtung der Messkapsel 2 gegenüber dem Gehäuse 20. An den freie Enden von Haken 10 bildenden Stegabschnitten des äußeren Steges 8 sind nach innen weisende Hakenvorsprünge 13 ausgebildet. Zwischen den Zentrierungsabschnitten 9 des äußeren Steges 8 und den Haken 10 ist jeweils eine Nut 14 vorgesehen. Zwischen den Hakenvorsprüngen 13 und der Bodenfläche 6 des Befestigungsringes 7 ist ein Federelement 15, bspw. ein Federring oder eine Federscheibe, eingesetzt.

An dem Gehäuse 20, das bspw. ein in eine Wasserleitung integriertes Unterputzgehäuse ist, ist an dem nach außen weisenden Gehäusestutzen 21 eine innere, zylindrische Dichtfläche 22 vorgesehen. An der Außenseite des Gehäusestutzens 21 ist ein eine Zentrierungsfläche 23' aufweisender umlaufender Vorsprung 23 mit einer Haltekante 24 ausgebildet. Wie sich aus Fig. 2 ergibt, sind an dem Vorsprung 23 Ansätze 25 ausgebildet, deren Breite etwa der Breite der Nuten 14 des Befestigungsringes 3 entspricht.

Nachfolgend wird die Betriebs- und Funktionsweise des Flüssigkeitszählers 1 beschrieben.

Bei der Montage wird die Messkapsel 2 axial in das Gehäuse eingeführt, wobei die Haken 10 elastisch nach außen gebogen werden bis die Hakenvorsprünge 13 an der Haltekante 24 des Vorsprungs 23 des Gehäuses 20 vorbeigleiten und elastisch hinter dem Vorsprung 23 einschnappen. Das Federelement 15 gleicht dann mögliche axiale Fertigungstoleranzen zwischen dem Vorsprung 23 und den Haken 10 aus und bringt die gesamte Messkapsel 2 in eine definierte axiale Lage zum Gehäuse 20.

Die Innenflächen 9' der Zentrierungsabschnitte 9 zwischen den Haken 10 gewährleisten zusammen mit der Zentrierungsfläche 23' des Vorsprunges 23 die Zentrierung der Messkapsel 2 im Gehäuse 20. Der O-Ring 12 dichtet die Messkapsel 2 an der Dichtfläche 22 radial nach außen ab. Optional kann noch ein zweiter O-Ring vorgesehen werden, damit auch dann die Dichtfunktion gewährleistet ist, wenn die Dichtfläche nach einer bestimmten Einsatzdauer der Messkapsel 2 (in der Regel eine Eichperiode) verschmutzt ist und der erste O-Ring allein die Dichtfunktion nicht mehr erfüllen kann.

Bei dieser Variante dieser Ausführungsform sind die Haken 10 so ausgeführt, dass sie entweder zum Demontieren der Messkapsel 2 zerstört werden müssen, bspw. durch Abbrechen mittels eines Schraubendrehers, oder beim Versuch der Demontage von selbst zerstört werden. Hierzu sind an den Haken 10 eine Sollbruchstelle 33 und ein Schlitz 34 zum Eingriff eines Schraubendrehers vorgesehen. Bei dieser Variante übernehmen die Haken 10 neben der Messkapselbefestigung auch die Funktion des Manipulationsschutzes, so dass eine zusätzliche Sicherung, bspw. durch einen Plombierring oder eine Drahtplombe, entfallen kann. Durch Zusammenwirken der Ansätze 25 des Vorsprunges 23 an dem Gehäuse 20 mit den Nuten 14 des Befestigungsringes 3 wird eine Verdrehsicherung der Messkapsel 2 erreicht.

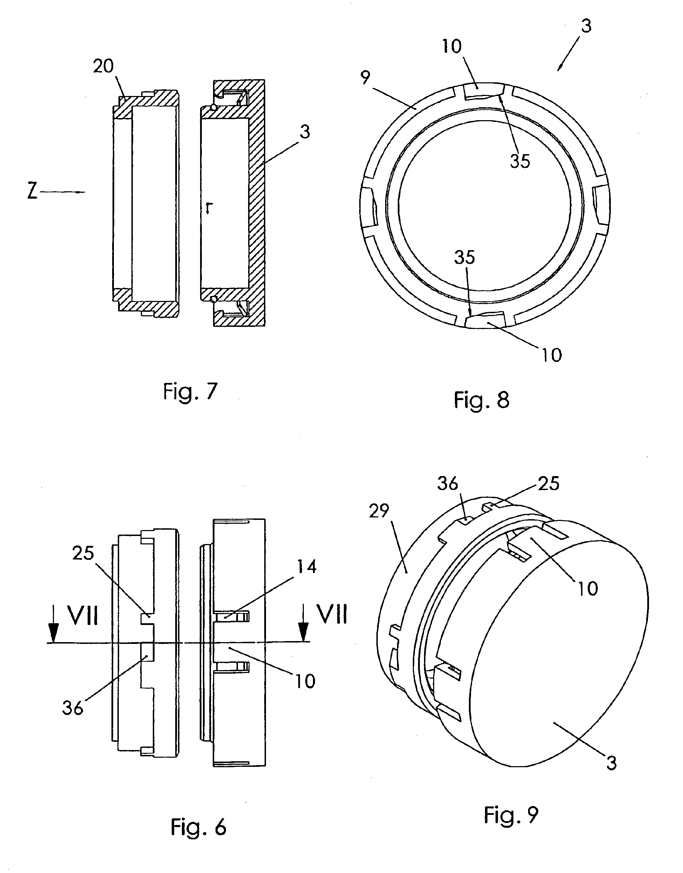

Bei der in den Fig. 6 bis 9 dargestellten zweiten Variante dieser Ausführungsform sind an den Haken 10 und dem Vorsprung 23 des Gehäuses 20 Schrägen 35 und 36 ausgebildet, die bei einer Demontage der Messkapsel 2 durch Drehen des Befestigungsringes 3 ein Spreizen der Haken 10 bewirken, so dass die Messkapsel 2 axial vom Gehäuse 20 abgezogen werden kann. Dadurch wird eine zerstörungsfreie Demontage der Messkapsel 2 ermöglicht.

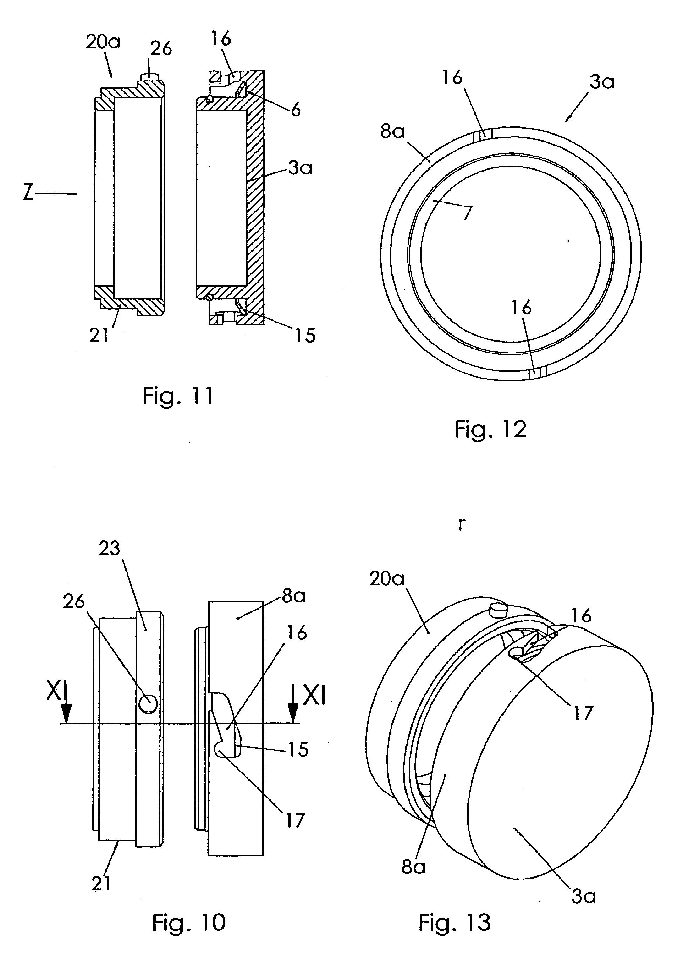

Bei der in den Fig. 10 bis 13 dargestellten zweiten Ausführungsform, die nicht Teil der Erfindung ist, sind das Gehäuse 20a und die Messkapsel 2 im Wesentlichen genauso aufgebaut wie bei der oben beschriebenen ersten Ausführungsform. An dem Befestigungsring 3a ist jedoch der äußere Steg 8a durchgehend ausgebildet und weist an mehreren, insbesondere zwei über den Umfang des Steges verteilten Stellen schräge Nuten 16 auf, die in eine Rastnut 17 übergehen. An dem Vorsprung 23a des Gehäuses 20a sind entsprechend den Nuten 16, 17 des Befestigungsringes 3a Ansätze 26 ausgebildet. Diese bilden zusammen mit den Nuten 16, 17 einen Bajonettverschluss, über den die Messkapsel 2 an dem Gehäuse 20a befestigt werden kann.

Hierzu wird die Messkapsel 2 bei der Montage mit den Nuten 16 axial auf die Ansätze 26 des Gehäuses 20a geschoben und anschließend durch Drehen im Uhrzeigersinn in die Raststellung gebracht, in der die Ansätze 26 in die Rastnuten 17 eingreifen. Als Sicherungselement dient wiederum das Federelement 15. Zur Demontage wird der Befestigungsring 3a entgegen der Kraft des Federelements 15 gelöst und entgegen dem Uhrzeigersinn aus dem Gehäuse 20a gedreht.

Im übrigen entspricht die zweite Ausführungsform der oben beschriebenen ersten Ausführungsform.

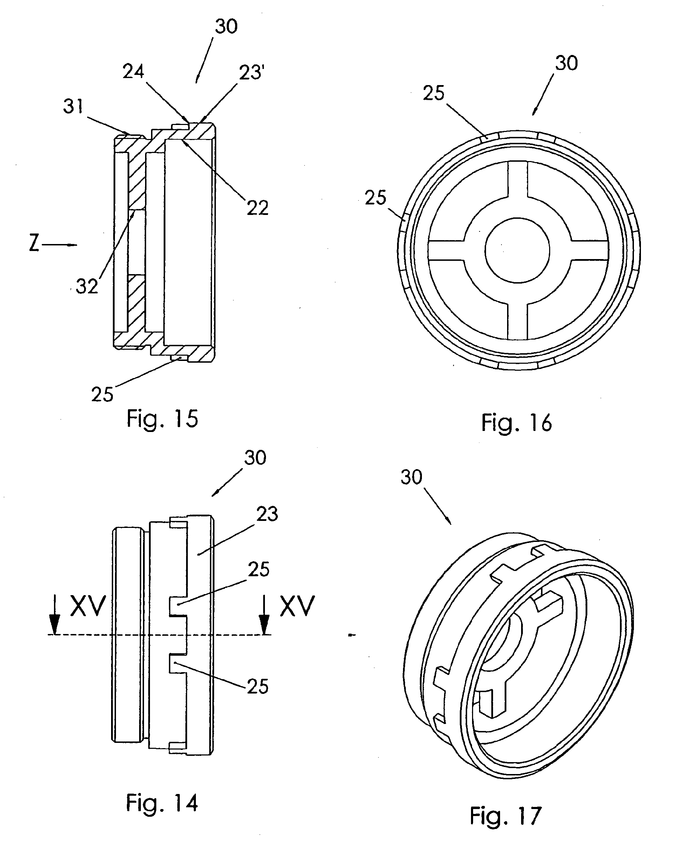

Um auch bereits bestehende Gehäuse mit dem erfindungsgemäßen Flüssigkeitszähler 1 versehen zu können, ist außerdem ein Adapter 30 vorgesehen, über den Messkapseln 2 an Gehäusen angebracht werden können, die zur Messkapselmontage ein herkömmliches Gewinde aufweisen. Ein erfindungsgemäßer Adapter ist in den Fig. 14 bis 17 dargestellt.

Der Adapter 30 weist an seiner Außenseite ein Gewinde 31 auf, das in das Gewinde an dem Gehäuse eingeschraubt werden kann. Im übrigen sind an dem Adapter 30 die Dichtfläche 22 und der zentrierende Vorsprung 23 ausgebildet, ebenso wie es oben für das Gehäuse 20 beschrieben wurde. Der Befestigungsring 3 kann somit in gleicher Weise auf den Adapter 30 aufgeschoben werden, wie es oben für das Gehäuse 20 beschrieben wurde. In dem Adapter 30 können außerdem Leitmittel 32 vorgesehen sein, die die Flüssigkeit der Hydraulik 4 in der erforderlichen Weise zuführen und wieder von dieser abführen. Die Leitmittel 32 sind in der Weise ausgestaltet, wie es bereits bei herkömmlichen Adaptern oder Messkapselbefestigungseinrichtungen vorgesehen ist. Hierzu wird auf die EP 0 388 736 B1 verwiesen, in der die entsprechende Gestaltung im einzelnen beschrieben ist.

Der in den Fig. 14 bis 17 dargestellte Adapter 30 zeigt eine der ersten Ausführungsform gemäß Fig. 2 bis 5 entsprechende Gestaltung. Es versteht sich, dass der Adapter 30 auch eine der zweiten Ausführungsform gemäß Fig. 10 bis 13 entsprechende Gestaltung und Bajonettverschluss aufweisen kann. Die hierzu gegebene Beschreibung bezieht sich entsprechend auf den Adapter.

Der Befestigungsring 3, 3a und der Adapter 30 können ganz oder teilweise aus Kunststoff bestehen, so dass das Gewicht der Messkapsel 2 verringert wird.

Durch die erfindungsgemäß vorgesehene Schnapp- oder Rastverbindung zwischen Messkapsel 2 und Gehäuse 20, 20a wird eine einfache Montage der Messkapsel 2 ohne zusätzliche Werkzeuge ermöglicht. Gleichzeitig wird eine zuverlässige Abdichtung gewährleistet, da die Dichtflächen und Dichtelemente nicht mehr von der Haltekraft belastet werden und eine definierte Anpresskraft der Dichtung gewährleistet wird.

### Bezugszeichenliste

- 1: Flüssigkeitszähler
- 2: Messkapsel
- 3, 3a: Befestigungsring
- 4: Hydraulik
- 5: Zählwerk
- 6: Bodenfläche
- 7: innerer Steg
- 8, 8a: äußerer Steg
- 9: Zentrierungsabschnitt
- 10: Haken
- 11: Nut
- 12: O-Ring
- 13: Hakenvorsprung
- 14: Nut
- 15: Federelement
- 16: Nut
- 17: Rastnut
- 20, 20a: Gehäuse
- 21: Gehäusestutzen
- 22: Dichtfläche
- 23: Vorsprung
- 23': Zentrierungsfläche
- 24: Haltekante
- 25: Ansatz
- 26: Ansatz
- 30: Adapter
- 31: Gewinde
- 32: Leitmittel
- 33: Sollbruchstelle
- 34: Schlitz
- 35: Schräge
- 36: Schräge

## Patentansprüche

1. Flüssigkeitszähler mit einem Gehäuse (20, 20a) und einer Messkapsel (2), die eine Hydraulik (4) zur Umwandlung eines Flüssigkeitsstromes in zählbare Werte und ein Zählwerk (5) aufweist und über einen Befestigungsring (3, 3a) an dem Gehäuse (20, 20a) befestigbar ist,
wobei an dem Gehäuse (20, 20a), an einem nach auβen weisenden Gehäusestutzen (21) eine innere, zylindrische Dichtfläche (22) und an der Auβenseite des Gehäusestutzens (21) eine zylindrische Zentrierungsfläche (23') ausgebildet sind,
wobei der Befestigungsring (3, 3a) als U-förmiger Ring ausgebildet ist, wobei der Befestigungsring ausgehend von einer Bodenfläche (6) einen umlaufenden inneren Steg (7), der mit der Dichtfläche (22) zusammenwirkt, zur Abdichtung der Messkapsel (2) gegenüber dem Gehäuse (20, 20a) und einen umlaufenden äußeren Steg (8, 8a), der mit der Zentrierungsfläche (23') zusammenwirkt, zur Zentrierung der Messkapsel (2) gegenüber dem Gehäuse (20, 20a) aufweist, und
wobei der Befestigungsring (3, 3a) über eine Schnapp- oder Rastverbindung an dem Gehäuse (20, 20a) gehalten wird, wobei an dem äußeren Steg (8) mehrere, insbesondere wenigstens drei, über den Umfang verteilte Haken (10) angeordnet sind, die einen die Zentrierungsfläche (23') tragenden Vorsprung (23) des Gehäuses (20, 20a) hintergreifen,
**dadurch gekennzeichnet, dass** zwischen den Haken (10) und der Bodenfläche (6) des Befestigungsringes (3, 3a) ein Federelement (15), bspw. ein Federring oder eine Federscheibe, zum Ausgleich axialer Fertigungstoleranzen zwischen dem Gehäusevorsprung (23) und dem Befestigungsring (3,3a), angeordnet ist.

2. Flüssigkeitszähler nach Anspruch 1, **dadurch gekennzeichnet, dass** an dem inneren Steg (7) eine umlaufende Nut (11) zur Aufnahme eines Dichtelementes (12) ausgebildet ist.

3. Flüssigkeitszähler nach einem der vorhergehenden Ansprüche, **dadurch gekennzeichnet, dass** die Haken (10) derart elastisch ausgebildet sind, dass sich die Haken (10) elastisch spreizen, wenn der Befestigungsring (3, 3a) über den Vorsprung (23) geschoben wird, und dass die Haken (10) nach Passieren des Vorsprungs (23) elastisch zurückspringen und den Befestigungsring (3, 3a) mit dem Gehäuse (20, 20a) verriegeln.

4. Flüssigkeitszähler nach einem der vorhergehenden Ansprüche, **dadurch gekennzeichnet, dass** an der dem Gehäuse (20) zugewandten Seite der Haken (10) eine Schräge (35) ausgebildet ist, die mit einer Schräge (36) am dem Vorsprung (23) Zusammenwirkt.

5. Flüssigkeitszähler nach einem der vorhergehenden Ansprüche, **dadurch gekennzeichnet, dass** die Haken (10) eine Sollbruchstelle (33) aufweisen.

6. Flüssigkeitszähler nach einem der vorhergehenden Ansprüche, **dadurch gekennzeichnet, dass** die Haken (10) einen Schlitz (34) aufweisen.

7. Flüssigkeitszähler nach einem der vorhergehenden Ansprüche, **dadurch gekennzeichnet, dass** in dem Befestigungsring (3a) mindestens eine Nut (14) für den Eingriff mindestens eines Ansatzes (25) an dem Gehäuse (20) ausgebildet ist.

8. Flüssigkeitszähler nach einem der vorhergehenden Ansprüche, **dadurch gekennzeichnet, dass** in dem äußeren Steg (8a) des Befestigungsringes (3a) mehrere über den Umfang verteilte schräge Nuten (16) für den Eingriff von an dem Gehäuse (20a) vorgesehenen Ansätzen (26) ausgebildet sind.

9. Flüssigkeitszähler nach einem der vorhergehenden Ansprüche, **dadurch gekennzeichnet, dass** zwischen Gehäuse und der Messkapsel (2) ein Adapter (30) vorgesehen ist, welcher an der dem Gehäuse zugewandten Seite ein Gewinde (31) zum Einschrauben in das Gehäuse aufweist, und an seiner der Messkapsel (2) zugewandten Seite die Dichtfläche (22) und/oder die Zentrierungsfläche (23') aufweist, so dass der Befestigungsring (3, 3a) zur Befestigung der Messkapsel (2) an dem Adapter (30) angreifen kann.

## Claims

1. A liquid meter comprising a housing (20, 20a) and a measuring capsule (2) that has a hydraulic system (4) for converting a liquid flow into countable values and has a counter (5), and that can be fixed on the housing (20, 20a) via a fixing ring (3, 3a),
wherein on the housing (20, 20a), on an outward facing housing collar (21), an inner, cylindrical sealing surface (22) is formed, and on the outside of the housing collar (21), a cylindrical centering surface (23') is formed,
wherein the fixing ring (3, 3a) is formed as a U-shaped ring, wherein the fixing ring has a circumferential inner web (7) that extends from a bottom surface (6) and interacts with the sealing surface (22) for sealing the measuring capsule (2) with respect to the housing (20, 20a), and has a circumferential outer web (8, 8a) that interacts with the centering surface (23') for centering the measuring capsule with respect to the housing (20, 20a), and
wherein the fixing ring (3, 3a) is held on the housing (20, 20a) via a snap-on or click-on connection, wherein on the outer web (8), a plurality of hooks (10), in particular at least three hooks are arranged that are distributed over the circumference and engage behind a projection (23) of the housing (20, 20a), which projection carries the centering surface (23'),
**characterized in that** between the hooks (10) and the bottom surface (6) of the fixing ring (3, 3a), a spring element (15), for example, a spring ring or a spring washer is arranged for compensating axial manufacturing tolerances between the housing projection (23) and the fixing ring (3, 3a).

2. The liquid meter according to claim 1, **characterized in that** a circumferential groove (11) for receiving a sealing element (12) is formed on the inner web (7).

3. The liquid meter according to any one of the preceding claims, **characterized in that** the hooks (10) are formed elastically in such a manner that the hooks (10) spread elastically when the fixing ring (3, 3a) is slid over the projection (23), and that after passing the projection (23), the hooks spring back elastically and interlock the fixing ring (3, 3a) on the housing (20, 20a).

4. The liquid meter according to any one of the preceding claims, **characterized in that** on that side of the hooks (10) that faces toward the housing (20), a chamfer (35) is formed that interacts with a chamfer (36) on the projection (23).

5. The liquid meter according to any one of the preceding claims, **characterized in that** the hooks (10) have a predetermined breaking point (33).

6. The liquid meter according to any one of the preceding claims, **characterized in that** the hooks (10) have a slot (34).

7. The liquid meter according to any one of the preceding claims, **characterized in that** in the fixing ring (3a) at least one groove (14) is formed for the engagement of at least one protrusion (25) with the housing (20).

8. The liquid meter according to any one of the preceding claims, **characterized in that** in the outer web (8a) of the fixing ring (3a), a plurality of oblique grooves (16) are formed that are distributed over the circumference for engagement with the protrusions (26) provided on the housing (20a).

9. The liquid meter according to any one of the preceding claims, **characterized in that** between the housing and the measuring capsule (2) an adaptor (30) is provided which, on the side facing toward the housing, has a thread (31) for screwing into the housing, and which, on its side facing toward the measuring capsule (2), has the sealing surface (22) and/or the centering surface (23') so that the fixing ring (3, 3a) can engage on the adaptor (30) for fixing the measuring capsule (2).

## Revendications

1. Compteur de liquide avec un boîtier (20, 20a) et une capsule de mesure (2) qui présente un système hydraulique (4) pour convertir un débit de liquide en valeurs dénombrables et un mécanisme de comptage (5) et qui peut être fixé au boîtier (20, 20a) par une bague de fixation (3, 3a)
pour lequel, sont constituées sur le boîtier (20, 20a), une surface de joint (22) cylindrique intérieure sur une tubulure de boîtier (21) tournée vers l'arrière et une surface de centrage (23') cylindrique sur la face extérieure de la tubulure de boîtier (21),
pour lequel la bague de fixation (3, 3a) est constituée comme une bague en forme de U, pour lequel la bague de fixation partant d'une surface de fond (6) présente une âme périphérique intérieure (7) qui coopère avec la surface de joint (22) pour étanchéifier la capsule de mesure (2) vis-à-vis du boîtier (20, 20a) et une âme périphérique extérieure (8, 8a) qui coopère avec la surface de centrage (23') pour centrer la capsule de mesure (2) vis-à-vis du boîtier (20, 20a) et
pour lequel la bague de fixation (3, 3a) est maintenue sur le boîtier par un raccord à déclic ou à crans, plusieurs crampons (10), en particulier au moins trois, répartis sur le circonférence étant disposés sur l'âme extérieure (8) qui saisissent en arrière une partie en saillie (23) du boîtier (20, 20a) portant la surface de centrage (23'),
**caractérisé en ce qu'**un élément élastique (15), par exemple une rondelle Grower ou une rondelle élastique pour compenser les tolérances de fabrication axiales entre la partie en saillie du boîtier (23) et la bague de fixation (3, 3a), est disposé entre le crampon (10) et la surface de fond (6) de la bague de fixation (3, 3a).

2. Compteur de liquide selon la revendication 1 **caractérisé en ce qu'**une rainure périphérique (11) est constituée sur l'âme intérieure (7) pour recevoir un élément d'étanchéité (12).

3. Compteur de liquide selon une quelconque des revendications précédentes **caractérisé en ce que** les crampons (10) sont constitués de façon élastique de sorte que les crampons (10) s'écartent de façon élastique, si la bague de fixation (3, 3a) est poussée sur la partie en saillie (23) et **en ce que** les crampons (10) rebondissent de façon élastique après passage de la partie en saillie (23) et verrouillent la bague de fixation (3, 3a) avec le boîtier (20, 20a).

4. Compteur de liquide selon une quelconque des revendications précédentes **caractérisé en ce qu'**un chanfrein (35) est constitué sur le côté des crampons (10) tourné vers le boîtier (20), qui coopère avec un chanfrein (36) sur la partie en saillie (23).

5. Compteur de liquide selon une quelconque des revendications précédentes **caractérisé en ce que** les crampons (10) présentent un point destiné à la rupture (33).

6. Compteur de liquide selon une quelconque des revendications précédentes **caractérisé en ce que** les crampons (10) présentent une fente (34).

7. Compteur de liquide selon une quelconque des revendications précédentes **caractérisé en ce que** dans la bague de fixation (3a) est constituée au moins une rainure (14) pour la mise en prise d'au moins un téton (25) sur le boîtier (20).

8. Compteur de liquide selon une quelconque des revendications précédentes **caractérisé en ce que** dans l'âme extérieure (8a) de la bague de fixation (3a), plusieurs rainures (16) obliques réparties sur la périphérie sont constituées pour la mise en prise des tétons (26) prévus sur le boîtier (20a).

9. Compteur de liquide selon une quelconque des revendications précédentes **caractérisé en ce qu'**entre le boîtier et la capsule de mesure (2) est prévu un adaptateur (30), lequel présente un filetage (31) sur le côté tourné vers le boîtier pour vissage dans le boîtier et présente sur son côté tourné vers la capsule de mesure (2) la surface de joint (22) et/ou la surface de centrage (23') de sorte que la bague de fixation (3, 3a) peut être appliquée à l'adaptateur (30) pour fixer la capsule de mesure (2).
